Europäisches Patentamt

(19) European Patent Office

Office européen des brevets

(11) **EP 0 901 991 A2**

(12) **EUROPEAN PATENT APPLICATION**

(43) Date of publication:
**17.03.1999 Bulletin 1999/11**

(51) Int. Cl.⁶: $C03C\ 17/245$, $C03C\ 17/34$

(21) Application number: **98116216.7**

(22) Date of filing: **27.08.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **29.08.1997 JP 233689/97**

(71) Applicant:
**Central Glass Company, Limited**
**Ube-shi, Yamaguchi-ken 755-0001 (JP)**

(72) Inventors:
• **Inoue, Motoharu**
**Research Inst. for Ind. Techno. of**
**Matsusaka-shi, Mie 515-0001 (JP)**
• **Waseda, Ryuta**
**Research Instit. for Ind. Techno. of**
**Matsusaka-shi, Mie 515-0001 (JP)**

(74) Representative:
**Schmidt, Christian et al**
**Manitz, Finsterwald & Partner GbR,**
**Robert-Koch-Strasse 1**
**80538 München (DE)**

(54) **Photocatalytic glass pane and method for producing same**

(57)     The invention relates to a photocatalytic glass pane including a glass substrate and at least one layer formed on at least one major surface of the glass substrate. The at least one layer has an outermost layer made of a photocatalytic titanium oxide. The outermost layer is prepared by a chemical vapor deposition. The titanium oxide is such that an X-ray diffraction chart of the titanium oxide has at least a first peak when a spacing between adjacent crystallographic planes of the titanium oxide is 3.5 angstroms and a second peak when a spacing between adjacent crystallographic planes of the titanium oxide is 1.9 angstroms and that the second peak has a height that is at least one-tenth of a height of the first peak. The glass pane is high in photocatalytic activity. The invention further relates to a method for producing the photocatalytic glass pane. This method has the sequential steps of (a) providing a gas mixture comprising a vapor of an organic titanium compound and an oxygen gas; and (b) bringing the gas mixture into contact with the glass substrate that is under a heated condition, thereby to form the outermost layer on the glass substrate. The glass pane can easily be produced by the method with high efficiency and low cost.

**FIG.2**

EP 0 901 991 A2

## Description

## BACKGROUND OF THE INVENTION

The present invention relates to a photocatalytic glass pane having a photocatalytic titanium oxide layer formed on a glass substrate thereof and a method for producing the glass pane.

Hitherto, titanium oxide films have been used for providing substrates (e.g. of glass, ceramics and resins) with reflection of heat rays and the like, abrasion resistance, heat resistance, weather resistance and chemical resistance, due to their superior characteristics such as high refractive index, high hardness, heat resistance and chemical resistance. Furthermore, much attention has been drawn in recent years to the photocatalytic activity of titanium oxide to oxidatively decompose organic contaminants.

There are several ways to form a titanium oxide film on a substrate. For example, in a spraying method, a titanium compound solution is sprayed onto a substrate and then pyrolyzed to form thereon a titanium oxide film. In a sol-gel process, a titania precursor sol is applied to a substrate, and then the resultant precursory film is heated to form thereon a titanium oxide film. In a chemical vapor deposition (CVD), a vapor of an organic titanium compound is brought into contact with a substrate that is under a heated condition, thereby to form thereon a titanium oxide film by pyrolysis.

Japanese Patent Second Publications JP-B-1-30771 and JP-B-57-47137 disclose methods for producing heat reflective glass panes. In each of these methods, a particular titanium compound solution is sprayed onto a heated glass substrate, thereby to form thereon a titanium oxide film by pyrolysis. Japanese Patent First Publication JP-A-9-59041 discloses an antifogging coating composition containing therein semiconductor photocatalyst particles that are most preferably titania particles. This composition is a dispersion in which (1) a silicone precursor or amorphous silica precursor and (2) semiconductor photocatalyst particles are uniformly dispersed in a solvent. JP-A-9-920 discloses a titanium oxide film that is sufficient in transparency. This film is formed on a substrate by spraying an ethanol solution containing 20 wt% of di-iso-propoxybis(acetylacetonato)titanium.

## SUMMARY OF THE INVENTION

It is an object of the present invention to provide a photocatalytic glass pane that is high in photocatalytic activity and superior in optical and physical characteristics such as heat reflection.

It is another object of the present invention to easily produce such a photocatalytic glass pane with high efficiency and low cost by forming at least one layer on at least one major surface of a glass substrate, while maintaining transparency, flatness and smoothness of the glass substrate.

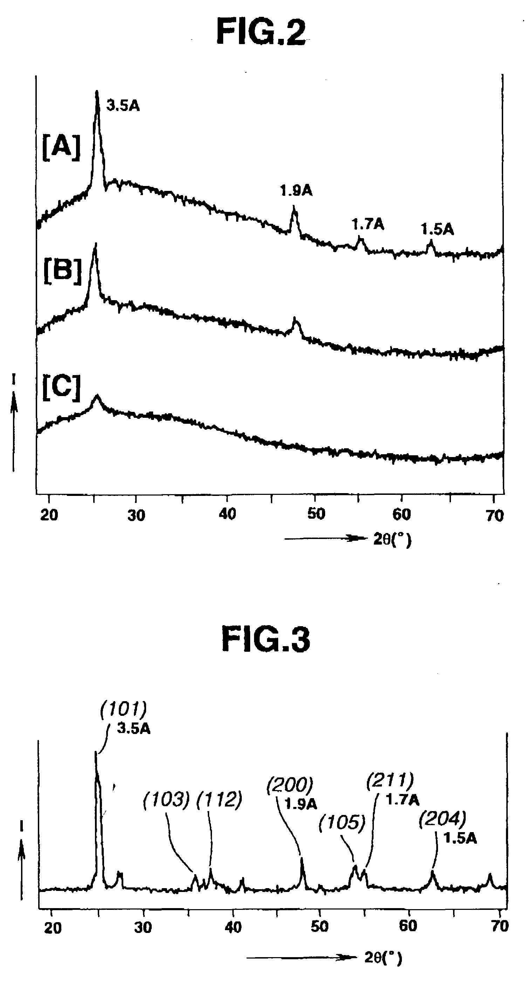

According to the present invention, there is provided a photocatalytic glass pane comprising a glass substrate; and at least one layer formed on at least one major surface of the glass substrate. The at least one layer has an outermost layer made of a photocatalytic titanium oxide. The outermost layer is prepared by chemical vapor deposition. The titanium oxide is such that an X-ray diffraction chart (pattern) of the titanium oxide has at least a first peak when a spacing between adjacent crystallographic planes (i.e., an interplaner spacing) of the titanium oxide is 3.5 angstroms (A) and a second peak when a spacing between adjacent crystallographic planes of the titanium oxide is 1.9 angstroms and that the second peak has a height that is at least one-tenth of a height of the first peak. As is commonly known, the peak height represents the intensity (I) of the diffracted X-rays (see Figs. 2-3). The glass pane is high in photocatalytic activity and superior in optical and physical characteristics such as heat reflection.

According to the present invention, there is provided a method for producing the above-mentioned photocatalytic glass pane. This method comprises the sequential steps of (a) providing a gas mixture comprising a vapor of an organic titanium compound and an oxygen gas; and (b) bringing the gas mixture into contact with the glass substrate that is under a heated condition, thereby to form the outermost layer on the glass substrate. The organic titanium compound may be titanium alkoxide selected from titanium tetraisopropoxide, titanium tetramethoxide, titanium tetraethoxide, and titanium monochlorotrialkoxide. The gas mixture may further comprise nitrogen gas. The glass pane can easily be produced by the method with high efficiency and low cost, while the glass substrate is maintained in transparency, flatness and smoothness.

## BRIEF DESCRIPTION OF THE DRAWINGS

Fig. 1 is a schematic side sectional view showing a float glass production line equipped with a nozzle for forming a titanium oxide film on a glass plate by CVD;

Fig. 2 is an X-ray diffraction chart showing X-ray diffraction patterns [A], [B] and [C] according to Examples 1 and 2 and Comparative Example 1, respectively; and

Fig. 3 is an X-ray diffraction chart of an anatase-type titanium oxide powder that is adherent to a glass substrate by a bonding agent.

DESCRIPTION OF THE PREFERRED EMBODIMENTS

In the invention, the outermost layer (i.e., a titanium oxide film) of the photocatalytic glass pane may be subjected to an X-ray diffraction analysis with CuK $\alpha$ X-rays produced by an output voltage of 10-60 kV and an electric current of 100-1,000 mA, a scanning speed of up to 10 degrees per minute, a diverging slit's opening angle of 1/2 degrees, and a scattering slit's opening angle of 1/2 degrees.

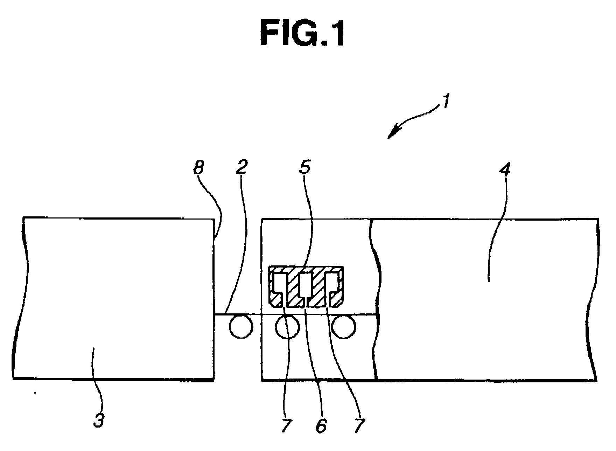

As mentioned above, the gas mixture comprising a vapor of an organic titanium compound may be brought into contact with a heated glass substrate (e.g., soda-lime float glass plate), during a float glass production (see Fig. 1). In other words, the outermost titanium oxide layer may be formed on a glass substrate by CVD, particularly under normal pressure (atmospheric pressure). With this, it becomes possible to make the photocatalytic glass pane of the invention to have good transparency, flatness and smoothness, which are inherent in glass itself. It is preferable to conduct the above-mentioned step (b) at a temperature not higher than 750°C. If the temperature is higher than 750°C, the glass substrate may be deformed during the step (b). Furthermore, the outermost layer may have cracks and/or wrinkles on its surface. As is seen from Fig. 1, the step (b) may be conducted in a float glass production line 1. In this line 1, a heated glass substrate 2 from a tin bath 3 is allowed to enter into an annealing chamber 4. It is optional to dispose a nozzle 5, which has a discharge slit 6 for discharging the gas mixture of the step (a) and exhaust slits 7 for exhausting the gas mixture, in the vicinity of the entrance of the annealing chamber 4, as illustrated. In fact, it is preferable to dispose the nozzle 5 in a region of the production line 1 that is at least 5 m downstream from the end top roller in order to conduct the step (b), since the force concentrates on the vicinity of the top roller disposed in the tin bath 3.

In the gas mixture of the above-mentioned step (a), it is preferable that the vapor of the organic titanium compound has a partial pressure of from 0.1 to 10 kPa, more preferably from 1 to 5 kPa, and that the oxygen gas has a partial pressure of from 3 to 40 kPa, more preferably from 10 to 36 kPa. With this, it becomes possible to obtain an anatase-type titanium oxide film that is superior in photocatalytic activity and strength. It is preferable to make the partial pressure of the oxygen gas higher in the preferable range, in order to provide the gas mixture with an oxidative atmosphere. With this, it becomes possible to produce the titanium oxide more effectively. If the oxygen concentration of the gas mixture is too high, the gas mixture may become inflammable to increase the fire risk. The steam contained in the gas mixture may accelerate the polycondensation of the organic titanium compound. This may interfere with pyrolysis of the organic titanium compound. Furthermore, scales may occur by the presence of the steam, during the introduction of the gas mixture into the nozzle for discharging the gas mixture. Thus, the partial pressure of the steam contained in the gas mixture is preferably not higher than 0.1 kPa, more preferably not higher than 0.01 kPa. In fact, it is the most preferable that the gas mixture does not contain steam.

Even if the temperature of the glass substrate is lower than 300°C, it is possible to form the outermost titanium oxide layer on the glass substrate. In this case, however, adhesion of the outermost layer to the glass substrate may become insufficient. Still furthermore, the X-ray diffraction chart of the obtained titanium oxide may not have clear peaks, and thus the titanium oxide may become insufficient in photocatalytic activity. Thus, the outermost titanium oxide layer is formed on a glass substrate heated preferably at a temperature of at least 300°C, more preferably at least 350°C, still more preferably 400-600°C. In particular, if the outermost layer of an anatase-type titanium oxide is formed on a glass substrate of at least 500°C, the outermost layer becomes substantially high in photocatalytic activity. In this case, if the thickness of the outermost layer, which is directly formed on a soda-lime glass substrate, is at least 50nm, it becomes possible to maintain the photocatalytic activity of the titanium oxide. In other words, alkali components, particularly sodium ions, do not interfere with the photocatalytic activity of the titanium oxide, and thus it is not necessary to provide an interlayer (barrier) between the glass substrate and the outermost layer. If the thickness of the outermost layer is greater than 300nm, the outermost layer becomes conspicuous in iridescence and thus may not be favorable in appearance.

As mentioned above, the titanium oxide of the invention is characterized in that an X-ray diffraction chart (pattern) of the titanium oxide has at least a first peak at a first spacing of 3.5 angstroms between adjacent crystallographic planes of the titanium oxide and a second peak at a second spacing of 1.9 angstroms between adjacent crystallographic planes of the titanium oxide and that the second peak has a height that is at least one-tenth of a height of the first peak (see Fig. 2). With this, the titanium oxide becomes substantially high in photocatalytic activity. The above-mentioned first and second spacings respectively correspond to diffraction angles 2θ of 25 and 48 degrees, as shown in Fig. 2. Furthermore, it is preferable that an X-ray diffraction chart of the titanium oxide has a third peak at a third spacing of 1.7 angstroms (2θ : 55 degrees) and a fourth peak at a fourth spacing of 1.5 angstroms (2θ : 63 degrees), as shown by the X-ray diffraction pattern [A] of Fig. 2. As mentioned above, the second peak has a height that is at least one-tenth of the height of the first peak. We assume that this means a good balance between the first peak in a direction of Miller indices 101 and the second peak in a direction of Miller indices 200 to make the titanium oxide high in photocatalytic activity.

In the invention, it is optional to provide at least one first interlayer having an intermediate refractive index of 1.55-2.0 and/or at least one second interlayer having a high refractive index of 2.6-2.9, between the glass substrate and the outermost titanium oxide layer. In fact, the first and second interlayers may be laminated alternately. The first interlayer is made of for example, aluminum oxide, tin oxide, indium oxide, zinc oxide or silicon oxycarbide, and the second interlayer contains as a main component thereof at least one metal oxide selected from chromium oxides, iron oxides, cobalt oxides and copper oxides. It is preferable to adjust the refractive index and thickness of the first or second interlayer such that the reflectance and excitation purity of the outermost layer are lowered by the interference of the reflected light from the first or second interlayer.

In the invention, it is optional that the at least one layer, having the outermost titanium oxide layer, is formed on one major surface of the glass substrate, and a reflective metal layer is formed on the other major surface of the glass substrate. With this, the obtained glass pane can be used as an antifogging mirror.

The following nonlimitative examples are illustrative of the present invention.

EXAMPLE 1

An outermost titanium oxide layer was directly formed on a glass substrate 2 by using a float glass production line 1 of Fig. 1, as follows. The glass substrate 2, having a thickness of 3 mm and a width of 3.6 m, was allowed to flow continuously at a speed of 8 m per minute in the production line 1. A nozzle 5, made of stainless steel, for forming the outermost layer on the glass substrate 2 was disposed 1.5 m downstream from an exit partition wall 8 of a tin bath 3. In fact, the nozzle 5 was disposed, at a height of 15 mm above the glass substrate 2, in the inside of an annealing chamber 4 and in the vicinity of the entrance of an annealing chamber 4, as illustrated. At the position of the nozzle 5, the temperature of the glass substrate's surface was found to be 570-580°C by the measurement with a radiation thermometer. The temperature of the bottom surface of the nozzle 5 was adjusted to be in a range of 200-220°C by allowing a beat carrying oil of 180°C to flow continuously through the interior of the nozzle 5. As shown in Fig. 1, the nozzle 5 was symmetrical about an axis of symmetry that is perpendicular to the direction of the flow of the glass substrate 2 in the production line 1. In fact, the nozzle 5 had a discharge slit 6 for discharging the gas mixture at a middle portion of the nozzle 5, and exhaust slits 7 for exhausting the gas mixture at both sides of the discharge slit 6. Each of the discharge and exhaust slits 6, 7 extends 3.2 m in a direction perpendicular to the direction of the flow of the glass substrate 2. The distance between the exhaust slits 7, 7 in the direction of the flow of the glass substrate 2 was 600 mm. A region between the exhaust slits 7, 7 was provided for forming the outermost layer on the glass substrate 2.

Separately, the gas mixture was prepared, as follows. At first, titanium tetraisopropoxide, preliminarily heated at 100°C, was atomized or sprayed at a rate of 240 g per minute into a hermetic stainless-steel container of a double wall structure, while a nitrogen gas, preliminarily heated at 180°C, was introduced as a carrier or atomizing gas into the container at a rate of 200 nL per minute. Then, the titanium tetraisopropoxide in the container was totally turned into a vapor by heat of the container having a double wall's void space filled with a heat carrying oil of 180°C. A mixture of titanium tetraisopropoxide (gas) and nitrogen gas was allowed to flow through a pipe from the container and then was mixed with an air preliminarily heated at 180°C and having a flow rate of 300nL per minute. The resultant gas mixture was lead to the discharge slit 6, while it was maintained at 180°C. Then, the resultant gas mixture was blown upon the glass substrate 2 from the discharge slit 6, thereby to form a titanium oxide film on the glass substrate 2 by pyrolysis under normal pressure. Each of the nitrogen and air of the resultant gas mixture was -60°C in dew point. The calculated partial pressures of the oxygen, titanium compound, and steam were about 12kPa, about 4kPa and 0.001kPa, respectively. The retractive index and thickness of the titanium oxide film were respectively found to be 2.38 and 135nm, from the results of the spectral reflectance of the titanium oxide film. The titanium oxide film was subjected to all X-ray diffraction analysis with CuK α X-rays produced by an output voltage of 50kV and an electric current of 200mA, incident angles starting from 2 degrees, a scanning speed of 5 degrees per minute, a diverging slit angle of 1/2 degrees, and a scattering slit angle of 1/2 degrees. The result of the X-ray diffraction analysis is shown by an X-ray diffraction pattern [A] of Fig. 2. This pattern was found to have first, second, third and fourth peaks at spacings between adjacent crystallographic planes of the titanium oxide of 3.5, 1.9, 1.7 and 1.5 angstroms. These spacings correspond to diffraction angles 2θ of 25, 48, 55 and 63 degrees respectively, as shown in Fig. 2. The relative heights of the first, second, third and fourth peaks were respectively 8, 2, 1 and 1, as shown in Fig. 2. In comparison with the X-ray diffraction pattern of Fig. 3 of Referential Example, in which a commercial anatase-type titanium oxide powder was bonded to a glass holder by a bonding agent (i.e., starch), it is assumed that the first, second, third and fourth peaks of the X-ray diffraction pattern [A] of Fig. 2 are diffraction lines generated by the titanium oxide's adjacent crystallographic planes 101, 200, 211 and 204, respectively. In fact, each numeral of three figures in parenthesis of Fig. 3 is Miller indices. The titanium oxide film of Referential Example had a white color and thus was not transparent. Furthermore, the titanium oxide powder of Referential Example comes off easily, and thus the titanium oxide film of Referential Example is substantially different from that of the invention.

In Example 1, the obtained glass pane having the titanium oxide film formed on the glass substrate was subjected to an abrasion resistance test. In this test, the titanium oxide film was abraded 200 times by a Taber abraser defined in Japanese Industrial Standard (JIS) R 3212. The transmittance after the abrasion resistance test was about 3.2% higher than that before this test. This means that the titanium oxide film was bonded to the glass substrate with a high bonding strength.

The photocatalytic activity of the obtained glass pane having widths of 100mm was determined as follows. At first, the glass pane was immersed in an oleic acid solution, and then withdrawn therefrom at a speed of 1.2mm per second. After that, water was dropped onto the titanium oxide film, and then the contact angle of water drop thereon was measured. The result of this was about 30 degrees. Then, the titanium oxide film was irradiated for 3 hr with ultraviolet rays using an ultraviolet lamp having an intensity of $0.5mW/cm^2$. Then, the contact angle of water drop was measured again, and the result was 8 degrees. This means that oleic acid was decomposed during the ultraviolet irradiation, and thus the titanium oxide film's surface became hydrophilic.

The obtained glass pane had a reflectance from the titanium oxide film of 35%, a dominant wavelength of 440nm, an excitation purity of 21%, and a transmittance of 62%.

The calculated rate for forming the titanium oxide film is as follows:

$$\text{(FilmThickness 135nm)} \times \text{(Glass Substrate Moving Speed 8m/min.)} \div \text{(Film Width 600mm)} = 1.8\ \mu m/min.$$

The calculated efficiency for forming the titanium oxide film is as follows:

$$\text{(Film Thickness 135nm)} \times \text{(Film Area 3.2m} \times \text{8m)/min.}$$
$$\times \text{(TiO}_2 \text{ Density 3.84)} \div 1,000 \div \text{(TiO}_2 \text{ Molecular Weight 80)}$$
$$\div \text{(Ti Alkoxide Supply Rate 240g/min)} \div \text{(Ti alkoxide Molecular Weight 284)} = 19.6\%.$$

EXAMPLE 2

In this example, Example 1 was repeated except in that the supply rate of titanium tetraisopropoxide was 100 g/min in place of 240 g/min and that the position of the nozzle 5 was 40m downstream from the exit partition wall 8 of the tin bath 3. The temperature of the glass substrate 2 at the position of the nozzle 5 was in a range of 390-400°C. The calculated partial pressures of the titanium compound, oxygen and steam of the gas mixture were 1.3kPa, 12kPa and 0.001kPa, respectively. The obtained titanium oxide film formed on the glass substrate was found to have a refractive index of 2.35 and a thickness of 45 nm. The obtained glass pane was found to have a visible light reflectance from the coated side of 30%, a dominant wavelength of 440nm, and an excitation purity of 15%. The result of the X-ray diffraction analysis is shown by an X-ray diffraction pattern [B] of Fig. 2. This pattern was found to have first and second peaks at spacings between adjacent crystallographic planes of the titanium oxide of 3.5 and 1.9 angstroms where the diffraction angles $2\theta$ are respectively 25 and 48 degrees. The relative heights of the first and second peaks were respectively 10 and 3, as shown in Fig. 2. The calculated rate and efficiency for forming the titanium oxide film on the glass substrate were 0.6 $\mu$m/min and 15.7%, respectively. The glass pane was subjected to the same photocatalytic activity test as that of Example 1, except in that the ultraviolet irradiation time was 10hr. After this test, the contact angle of water drop was found to be 16 degrees.

EXAMPLE 3

In this example, a float glass production line 1 of Example 1 was used except in that another nozzle, which is similar to the nozzle 5 in construction, was disposed in the vicinity of the nozzle 5 such that the another nozzle was interposed between the nozzle 5 and the tin bath 3. The another nozzle was used for forming an aluminum oxide interlayer on a glass substrate. In fact, aluminum acetylacetonato, NACEM aluminum of Nippon Chemical Industrial Co., Ltd., was transported through an stainless steel pipe having an internal diameter of 6mm, at a rate of 280 g/min by a device for quantitatively supplying powder, together with an air at a rate of 700nL/min. This stainless steel pipe had a coiled portion of 12 m immersed in a heat carrying oil bath of 220°C. After passing through the coiled portion, the aluminum acetylacetonato turned into a vapor. The thus obtained mixture of the aluminum acetylacetonato and the air was blown upon the glass substrate from a discharge slit of the another nozzle, thereby to form an aluminum oxide film on the glass substrate. This film was confirmed to be an aluminum oxide film having a thickness of about 70nm by Auger electron spectroscopy, although X-ray diffraction lines of this film were not found. The aluminum oxide film was found to have a reflectance from the coated aide of 9.5%, a refractive index of 1:61, and a thickness of 67nm.

Then, a titanium oxide film was formed on the aluminum oxide film in the same manner as that of Example 2 by using the nozzle 5 adjacent to the another nozzle. The obtained glass pane was found to have a visible light reflectance from the coated side of 14%, a dominant wavelength of 500nm, and an excitation purity of 3.5%. Thus, the reflected light from the coated side became more neutral as compared with those of Examples 1-2 by the provision of the aluminum oxide interlayer having an intermediate refractive index. The result of the X-ray diffraction analysis of the titanium oxide film was almost the same as that of Example 2. The glass pane was subjected to a photocatalytic activity test that is similar to that of Example 1. In fact, the ultraviolet irradiation times were 3 hr and 10 hr. After 3 hr, the contact angle of water drop was found to be 3 degrees. After 10 hr, it was found to be 1 degree.

EXAMPLE 4

In this example, Example 1 was repeated except in that the air preliminarily having a flow rate of 300nL per minute was replaced with a mixture of an air and an oxygen each having a flow rate of 150 nL/min. The calculated partial pressures of the oxygen, titanium compound and steam of the gas mixture were about 36kPa, about 4kPa and about 0.001kPa, respectively.

The titanium oxide film was found to have a refractive index of 2.38 and a thickness of 140nm, based on the spectral reflectance of the coated side of the glass pane. The X-ray diffraction pattern of the titanium oxide film was found to have first, second, third and fourth peaks at spacings between adjacent crystallographic planes of the titanium oxide of 3.5, 1.9, 1.6 and 1.4 angstroms where the diffraction angles $2\theta$ are respectively 25, 48, 55 and 63 degrees. The relative heights of the first, second, third and fourth peaks were respectively 8, 3, 1 and 1. The result of the abrasion resistance test, the increase in transmittance, was about 3.0%. The photocatalytic activity test was conducted in the same manner as that of Example 2. After 10hr of this test, the contact angle of water drop was 3 degrees. The obtained glass pane was found to have a visible light reflectance from the coated side of 35%, a dominant wavelength of 440nm, an excitation purity of 21%, and a transmittance of 62%.

EXAMPLE 5

In this example, Example 1 was repeated except in that the supply rate of titanium tetraisopropoxide was 40 g/min in place of 240 g/min and that the mixture of titanium tetraisopropoxide (gas) and nitrogen gas was mixed with a nitrogen gas having a dew point of -30°C and a flow rate of 1,000nL/min, together with the air having a flow rate of 300 nL/min. The calculated partial pressures of the titanium compound, oxygen, and steam of the gas mixture were about 0.25kPa, 4kPa and 0.04kPa, respectively.

The titanium oxide film was found to have a refractive index of 2.37 and a thickness of 20nm, based on the spectral reflectance of the coated side of the glass pane. The obtained glass pane was found to have a visible light reflectance from the coated side of 18%, a dominant wavelength of 430nm, and an excitation purity of 19%. The X-ray diffraction pattern of the titanium oxide film was found to have first and second peaks at spacings between adjacent crystallographic planes of the titanium oxide of 3.5 and 1.9 angstroms where the diffraction angles $2\theta$ are respectively 25 and 48 degrees. The relative heights of the first and second peaks were respectively 9 and 1. The result of the abrasion resistance test, the increase in transmittance, was about 3.0%. The rates and efficiency for forming the titanium oxide film on the glass substrate were 0.27 $\mu$m/min and 17.4%, respectively. The photocatalytic activity test was conducted in the same manner as that of Example 2. After 10hr of this test, the contact angle of water drop was 10 degrees.

COMPARATIVE EXAMPLE 1

In this example, Example 2 was repeated except in that the position of the nozzle 5 was 70m downstream from the exit partition wall 8 of the tin bath 3 and that the amount of steam in the gas mixture was adjusted to have a partial pressure of 0.5kPa. The temperature of the glass substrate surface at the position of the nozzle was 260°C . The titanium oxide film was found to have a refractive index of 2.28 and a thickness of 20nm, based on the spectral reflectance of the coated side of the glass pane. In the abrasion resistance test, the titanium oxide film exfoliated from the glass substrate by 40 rotations of the Taber abraser. The result of the X-ray diffraction analysis of the titanium oxide film is shown by the X-ray diffraction pattern [C] of Fig. 2. In fact, the X-ray diffraction pattern was found to have only one peak at a spacing between adjacent crystallographic planes of the titanium oxide of 3.5 angstroms where the diffraction angle $2\theta$ is 25 degrees. The photocatalytic activity test was conducted in the same manner as that of Example 2. After 10hr of this test, the contact angle of water drop was 31 degrees. It is assumed that the titanium oxide film was insufficient in compactness and too low in refractive index, since the glass substrate surface temperature was too low. Furthermore, it was found that the titanium oxide film was insufficient in crystallinity and thus in photocatalytic activity. It should be noted that scales of titanium oxide and titanium hydroxide accumulated on the device for forming the titanium oxide film and thus 30 minutes after the start of the CVD of the titanium oxide many streaks occurred on the titanium oxide film in a direction along the movement of the glass substrate.

COMPARATIVE EXAMPLE 2

In this example, Example 1 was repeated except in that the titanium tetraisopropoxide was replaced with titanium tetraethoxide and that the supply rates of the titanium tetraethoxide and the air were 300g/min and 20nL/min, in place of 240g/min and 300nL/min, respectively. The partial pressures of the oxygen, titanium compound and steam of the gas mixture were 1.8kPa, 13kPa and 0.001kPa, respectively. The titanium oxide film was found to have a refractive index of 2.51 and a thickness of 42nm, based on the spectral reflectance of the coated side of the glass pane. The photocatalytic activity test was conducted in the same manner as that of Example 2. After 10hr of this test, the contact angle of water drop was 29 degrees. It is assumed that the titanium oxide film was insufficient in crystallinity and photocatalytic activity, since the partial pressure of the titanium compound vapor was too high and the partial pressure of the oxygen was too low. Making a comparison between the results of Examples 1-5 and the results of Comparative Example 2, titanium ethoxide may be inferior to titanium isopropoxide in obtainment of photocatalytic activity.

COMPARATIVE EXAMPLE 3

In this comparative example, Example 1 was repeated except in that a methylene chloride solution containing 20 wt% of titanium diisopropoxybisacetylacetonato, T-50 (trade name) of Nippon Soda Co., Ltd., was sprayed onto the glass substrate at a rate of 2,500 g/min, thereby to form a titanium oxide film on the glass substrate by pyrolysis. In fact, the methylene chloride solution was sprayed from a spraying device under a liquid pressure of 90 kg/cm$^2$ at a level 250mm higher than the glass substrate surface, while a nozzle of the spraying device was reciprocated at a speed of 2 m/s, in a direction perpendicular to that of the movement of the glass substrate, with an amplitude of 2.5 m. Furthermore, a space for conducting the spraying was enclosed by a chamber, and the atmosphere of the chamber was exhausted at a rate of 15,000 nm$^3$ per hour.

The obtained titanium oxide film was found to have a refractive index of 2.29 and a thickness of 42nm, based on the spectral reflectance of the coated side of the glass pane. The X-ray diffraction pattern of the titanium oxide film was found to have only first and second peaks at spacings between adjacent crystallographic planes of the titanium oxide of 3.5 angstroms and 1.9 angstroms where the diffraction angles $2\theta$ are 25 and 48 degrees, respectively. The height of the second peak was one-twelfth of that of the first peak. The glass pane was subjected to the abrasion resistance test. In this test, the increase of transmittance after 200 rotations of the Taber abraser was 6.6%. This means that the titanium oxide film was insufficient in adhesion strength. The glass pane did not have a high photocatalytic activity as those of Examples 1-5. Thus, it is assumed that the titanium oxide film of Comparative Example 3 is substantially lower in crystallinity than those of Examples 1-5.

The entire disclosure of Japanese Patent Application No. 9-233689 filed on August 29, 1997, including specification, claims, drawings and summary, is incorporated herein by reference in its entirety.

**Claims**

1. A photocatalytic glass pane comprising:

   a glass substrate; and
   at least one layer formed on at least one major surface of said glass substrate, said at least one layer having an outermost layer made of a photocatalytic titanium oxide, said outermost layer being prepared by a chemical vapor deposition,
   wherein said titanium oxide is such that an X-ray diffraction chart of said titanium oxide has at least a first peak when a spacing between adjacent crystallographic planes of said titanium oxide is 3.5 angstroms and a second peak when a spacing between adjacent crystallographic planes of said titanium oxide is 1.9 angstroms and that said second peak has a height that is at least one-tenth of a height of said first peak.

2. A glass pane according to claim 1. wherein said X-ray diffraction chart of said titanium oxide further has a third peak when a spacing between adjacent crystallographic planes of said titanium oxide is 1.7 angstroms and a fourth peak when a spacing between adjacent crystallographic planes of said titanium oxide is 1.5 angstroms.

3. A glass pane according to claim 1, wherein said X-ray diffraction chart of said titanium oxide is obtained by allowing K$\alpha$ X-rays from a copper target to impinge against said outermost layer.

4. A glass pane according to claim 1, wherein said titanium oxide is of an anatase type.

5. A glass pane according to claim 1, wherein said outermost layer has a thickness that is not greater than 300 nm.

6. A glass pane according to claim 1, wherein said at least one layer further has an interlayer interposed between said glass substrate and said outermost layer, said interlayer having a refractive index of from 2.6 to 2.9 and comprising at least one metal oxide selected from the group consisting of chromium oxides, iron oxides, cobalt oxides and copper oxides.

7. A glass pane according to claim 1, wherein said at least one layer further has an interlayer interposed between said glass substrate and said outermost layer, said interlayer having a refractive index of from 1.55 to 2.0 and comprising at least one compound selected from the group consisting of aluminum oxides, tin oxides, indium oxides, zinc oxides and silicon oxycarbide.

8. A glass pane according to claim 1, wherein said chemical vapor deposition is conducted by a method comprising the sequential steps of:

   (a) providing a gas mixture comprising a vapor of an organic titanium compound and an oxygen gas; and
   (b) bringing said gas mixture into contact with said glass substrate that is under a heated condition, thereby to form said outermost layer on said glass substrate.

9. A glass pane according to claim 8, wherein said gas mixture further comprises a nitrogen gas.

10. A glass pane according to claim 9, wherein said vapor of said organic titanium compound has a partial pressure of from 0.1 to 10 kPa, and said oxygen gas has a partial pressure of from 3 to 40 kPa.

11. A glass pane according to claim 8, wherein said gas mixture is free of a steam.

12. A glass pane according to claim 1, wherein said at least one layer is formed on one major surface of said glass substrate, and a reflective metal layer is formed on the other major surface of said glass substrate, so that said glass pane is usable as an antifogging mirror.

13. A method for producing a photocatalytic glass pane, said photocatalytic glass pane comprising a glass substrate; and at least one layer formed on at least one major surface of said glass substrate, said at least one layer having an outermost layer made of a photocatalytic titanium oxide, said outermost layer being prepared by a chemical vapor deposition, wherein said titanium oxide is such that an X-ray diffraction chart of said titanium oxide has at least a first peak when a spacing between adjacent crystallographic planes of said titanium oxide is 3.5 angstroms and a second peak when a spacing between adjacent crystallographic planes of said titanium oxide is 1.9 angstroms and that said second peak has a height that is at least one-tenth of a height of said first peak, said method comprising the sequential steps of:

   (a) providing a gas mixture comprising a vapor of an organic titanium compound and an oxygen gas; and
   (b) bringing said gas mixture into contact with said glass substrate that is under a heated condition, thereby to form said outermost layer on said glass substrate.

14. A method according to claim 13, wherein said gas mixture further comprises a nitrogen gas.

15. A method according to claim 13, wherein said vapor of said organic titanium compound has a first partial pressure of from 0.1 to 10 kPa, and said oxygen gas has a second partial pressure of from 3 to 40 kPa.

16. A method according to claim 15, wherein said first partial pressure is from 1 to 5 kPa, and said second partial pressure is from 10 to 36 kPa.

17. A method according to claim 13, wherein said gas mixture is free of a steam.

18. A method according to claim 13, wherein the step (b) is conducted at a temperature not higher than 750°C.

19. A method according to claim 13, wherein said glass substrate is heated at a temperature not lower than 300°C.

20. A method according to claim 19, wherein said temperature of said glass substrate is from 400 to 600°C.

21. A method according to claim 20, wherein said temperature of said glass substrate is from 500 to 600°C.

**22.** A method according to claim 13, wherein, prior to the step (b), an interlayer is formed on said glass substrate, said interlayer having a refractive index of 2.6-2.9 and comprising at least one metal oxide selected from the group consisting of chromium oxides, iron oxides, cobalt oxides and copper oxides.

**23.** A method according to claim 13, wherein, prior to the step (b), an interlayer is formed on said glass substrate, said interlayer having a refractive index of from 1.55 to 2.0 and comprising at least one metal oxide selected from the group consisting of aluminum oxides, tin oxides, indium oxides, and zinc oxides.

**24.** A method according to claim 13, wherein, prior to the step (b), an interlayer is formed on said glass substrate, said interlayer having a refractive index of from 1.55 to 2.0 and comprising silicon oxycarbide.

**25.** A method according to claim 13, wherein said organic titanium compound is a titanium alkoxide.

**26.** A method according to claim 25, wherein said titanium alkoxide is at least one selected from the group consisting of titanium tetraisopropoxide, titanium tetramethoxide, titanium tetraethoxide, and titanium monochlorotrialkoxide.

**27.** A method according to claim 22, wherein said interlayer is formed by bringing a gas mixture into contact with said glass substrate, said gas mixture comprising a vapor of at least one compound of at least one metal selected from the group consisting of chromium, iron, cobalt and copper.

**28.** A method according to claim 27, wherein said at least one compound is at least one acetylacetonato of said at least one metal.

**29.** A method according to claim 23, wherein said interlayer is formed by bringing a gas mixture into contact with said glass substrate, said gas mixture comprising a vapor of at least one compound of at least one metal selected from the group consisting of aluminum, tin, indium and zinc.

**30.** A method according to claim 29, wherein said at least one compound is at least one acetylacetonato of said at least one metal.

**31.** A method according to claim 24, said interlayer is formed by bringing a gas mixture into contact with said glass substrate, said gas mixture comprising silane gas, an ethylenic hydrocarbon gas and carbon dioxide.

# FIG.1

# FIG.2

# FIG.3